# EUROPÄISCHE PATENTSCHRIFT

(11) **EP 3 157 791 B1**
(45) Veröffentlichungstag und Bekanntmachung des Hinweises auf die Patenterteilung: **18.07.2018**
(21) Anmeldenummer: 15726910.1
(22) Anmeldetag: 27.05.2015
(51) Int. Cl.: B60W 10/06, B60W 10/08, B60W 20/00, B60W 50/00, B60K 6/46

(54) **LEISTUNGSSTEUERVORRICHTUNG FÜR EINE MOTORSTEUERVORRICHTUNG, MOTORSTEUERVORRICHTUNG UND MOTORSYSTEM**
OUTPUT CONTROLLER FOR AN ENGINE CONTROLLER, ENGINE CONTROLLER, AND ENGINE SYSTEM
DISPOSITIF DE COMMANDE DE PUISSANCE POUR DISPOSITIF DE COMMANDE DE MOTEUR, DISPOSITIF DE COMMANDE DE MOTEUR ET SYSTÈME DE MOTEUR

(30) Priorität: 17.06.2014 DE 102014211625
(43) Veröffentlichungstag der Anmeldung: 26.04.2017
(73) Patentinhaber: Robert Bosch GmbH, 70442 Stuttgart (DE)
(72) Erfinder: PRAXMARER, Meinrad, A-1060 Wien (AT); MEDVECKY, Milos, 71679 Asperg (DE); WAGNER, Andreas, 70563 Stuttgart (DE); SILBERBAUER, Martin, A-1050 Wien (AT); SPIELMANN, Bernd, 74379 Ingersheim (DE)
(86) Internationale Anmeldenummer: PCT/EP2015/061637
(87) Internationale Veröffentlichungsnummer: WO 2015/193067

(56) Entgegenhaltungen:
- DE-A1-102010 029 706
- US-A1- 2004 174 124
- US-A1- 2006 022 469
- US-A1- 2008 179 891

## Beschreibung

Die vorliegende Erfindung bezieht sich auf eine Leistungssteuervorrichtung für eine Motorsteuervorrichtung für ein Motorsystem mit einem Verbrennungsmotor und mit einem, mit dem Verbrennungsmotor gekoppeltem, elektrischen Generator. Ferner bezieht sich die vorliegende Erfindung auf eine entsprechende Motorsteuervorrichtung und ein entsprechendes Motorsystem.

### Stand der Technik

In der Fahrzeugtechnik wird versucht, den Treibstoffverbrauch moderner Kraftfahrzeuge immer weiter zu reduzieren. Neben Verbesserungen an herkömmlichen Verbrennungsmotoren werden immer häufiger auch Elektromotoren in Fahrzeugen eingesetzt. Die Elektromotoren können dabei z.B. den Verbrennungsmotor unterstützen. Dieses Prinzip wird in sog. Hybridfahrzeugen eingesetzt.

Alternativ kann der Elektromotor aber auch den Verbrennungsmotor in dem Fahrzeug ersetzen. Ein Fahrzeug in welchem der Elektromotor der einzige Antriebsmotor ist, wird auch Elektrofahrzeug genannt. Auf Grund der beschränkten Kapazität momentan verfügbarer elektrischer Energiespeicher ist die Reichweite solcher Elektrofahrzeuge begrenzt.

Eine Möglichkeit die Reichweite von Elektrofahrzeugen zu erhöhen bietet ein sog. Range Extender. Bei Elektrofahrzeugen mit Range Extender ist neben dem rein elektrischen Antriebssystem ein unabhängiger Verbrennungsmotor mit einer E-Maschine gekoppelt, um elektrische Energie für den Antrieb zu erzeugen. Abhängig von Fahrzustand und Ladezustand der Batterie soll die E-Maschine eine gewünschte elektrische Leistung erzeugen.

Ein möglicher Range Extender wird z.B. in der US 2013 300 126 A1 gezeigt.

Üblicherweise wird die Leistung, welche der Range Extender erzeugt, durch Wahl von Drehmoment und Drehzahl des Verbrennungsmotors eingestellt. Zum Einstellen des Drehmoments an einem Ottomotor dienen als Stellglied die Drosselklappe und die Zündwinkelverstelleinrichtung. Zum Einstellen des Drehmoments an einem Dieselmotor dienen die einstellbare Einspritzdauer und der Einspritzwinkel.

Der beste Wirkungsgrad für die aktuelle Drehzahl stellt sich bei Verbrennungsmotoren allerdings nur bei einem bestimmten Drehmoment ein. Da die Drehzahl durch Verändern des Verbrennerdrehmoments geregelt werden muss, ist mit dieser Struktur keine wirkungsgradoptimale Leistungsregelung möglich.

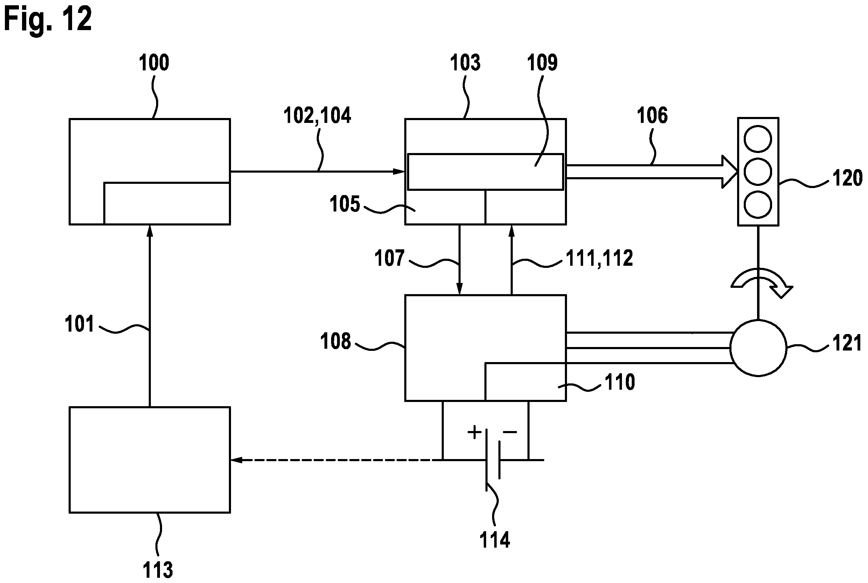

Um eine wirkungsgradoptimale Leistungsregelung ausführen zu können, darf das Verbrennerdrehmoment nicht Ausgang des Drehzahlreglers sein, sondern muss frei wählbar sein. Die Drehzahlregelung muss über das Drehmoment der E-Maschine erfolgen. Diese Struktur ist in Fig. 12 dargestellt.

Fig. 12 zeigt die Struktur eines Steuer- bzw. Regelsystems für ein Motorsystem mit einem übergeordneten Steuergerät 100, welches u.a. aus dem Ladezustand 101 der Fahrzeugbatterie, auch SOC genannt, eine elektrische Solleistung 102 von dem Verbrennungsmotorsteuergerät 103 fordert. Aufgrund von Vorgaben bezüglich der Schallentwicklung kann dabei die Motordrehzahl auf einen Maximalwert 104 begrenzt werden.

Im Range Extender System - hier beispielhaft dargestellt in dem Verbrennungsmotorsteuergerät 103 - regelt eine Leistungsregelfunktion 105 die elektrische Ausgangsleistung auf die vorgegebene Solleistung 102. Die Leistungsregelfunktion 105 berechnet das vom Verbrennungsmotor 120 abzugebende Drehmoment 106 und die am Generator 121 einzustellende Drehzahl 107, die von einem E-Maschinensteuergerät 108 gefordert wird. Ferner ist in dem Verbrennungsmotorsteuergerät 103 eine Funktion 109 vorhanden, welche im wesentlichem das Drehmoment 106 im Verbrennungsmotor 120 einstellt, indem je nach Art des Verbrennungsmotors 120 die geeigneten Aktoren wie Drosselklappenstellung, Zündwinkel und Einspritzmengen- und Zeitpunkte geregelt bzw. gesteuert werden.

In dem E-Maschinensteuergerät 108 sorgt eine Drehzahlregelfunktion 110 dafür, dass der Solldrehzahl 107 eingeregelt wird. Dies kann beispielsweise mit einem Pl-Regler erfolgen, dessen Eingang die gemessene Istdrehzahl und dessen Ausgang das Drehmoment an der E-Maschine 121 sein kann. Der aktuelle E-Maschinenstrom 111 und die Hochvoltspannung 112 werden an die Leistungsregelfunktion 105 gesandt, die hier beispielhaft in dem Verbrennungsmotorsteuergerät 103 dargestellt ist. Das Batteriemanagementsystem 113 ermittelt laufend den SOC 101 und die Ladegrenzen der Hochvoltbatterie 114.

### Offenbarung der Erfindung

Die vorliegende Erfindung offenbart eine Leistungssteuervorrichtung mit den Merkmalen des Patentanspruchs 1, eine Motorsteuerung mit den Merkmalen des Patentanspruchs 11 und ein Motorsystem mit den Merkmalen des Patentanspruchs 13.

Demgemäß ist vorgesehen:
Eine Leistungssteuervorrichtung für eine Motorsteuerung für ein Motorsystem mit einem Verbrennungsmotor und einem mit dem Verbrennungsmotor gekoppeltem elektrischen Generator, mit einer Recheneinrichtung, welche ausgebildet ist, eine mechanische Sollleistung für das Motorsystem und eine maximal zulässige Drehzahl für den Verbrennungsmotor zu empfangen und basierend auf der Solleistung und der maximal zulässigen Drehzahl eine Solldrehzahl für den elektrischen Generator und ein Ausgangsdrehmoment des Verbrennungsmotors zu berechnen, mit einer Trägheitskompensationseinrichtung, welche dazu ausgebildet ist, basierend auf einer Änderung der Solldrehzahl für den elektrischen Generator ein durch ein Gesamtmassenträgheitsmoment des Verbrennungsmotors und des Generators auf eine Welle des Generators übertragenes Drehmoment zu berechnen und basierend auf dem übertragenen Drehmoment und dem berechneten Ausgangsdrehmoment des Verbrennungsmotors ein Solldrehmoment für den Verbrennungsmotor zu berechnen, und mit einer Effizienzberechnungseinrichtung, welche ausgebildet ist, basierend auf der Solldrehzahl für den elektrischen Generator und dem berechneten Ausgangsdrehmoment des Verbrennungsmotors und einer Batteriespannung und einem Generatorstroms einer Batterie des Motorsystems und dem berechneten Solldrehmoment für den Verbrennungsmotor einen Wirkungsgrad des Motorsystems zu berechnen und den Wert für die mechanische Sollleistung, welche der ersten Recheneinrichtung zugeführt wird, basierend auf dem berechneten Wirkungsgrad anzupassen.

Ferner ist vorgesehen:
Eine Motorsteuervorrichtung für ein Motorsystem mit einem Verbrennungsmotor und einem mit dem Verbrennungsmotor gekoppeltem elektrischen Generator, mit einer erfindungsgemäßen Leistungssteuervorrichtung, mit einer Drehzahlsteuereinrichtung, welche mit der Leistungssteuervorrichtung gekoppelt ist und ausgebildet ist, von der Leistungssteuervorrichtung ein Ausgangsmoment des Verbrennungsmotors zu erhalten und die Drehzahl des elektrischen Generators in Abhängigkeit von einer von der Leistungssteuervorrichtung angefragten Solldrehzahl und dem Ausgangsmoment des Verbrennungsmotors zu steuern.

Schließlich ist vorgesehen:
Ein Motorsystem mit einem Verbrennungsmotor, mit einem mit dem Verbrennungsmotor gekoppeltem elektrischen Generator, und mit einer erfindungsgemäßen Motorsteuervorrichtung, welche mit dem Verbrennungsmotor und mit dem Generator gekoppelt ist und ausgebildet ist, den Verbrennungsmotor und den Generator zu steuern.

### Vorteile der Erfindung

Die der vorliegenden Erfindung zu Grunde liegende Erkenntnis besteht darin, dass mit herkömmlichen Steuer- und Regelsystemen für Elektrofahrzeuge mit Range-Extender keine wirkungsgradoptimale Regelung möglich ist und dadurch ein erhöhter Treibstoffverbrauch entsteht.

Die der vorliegenden Erfindung zu Grunde liegende Idee besteht nun darin, dieser Erkenntnis Rechnung zu tragen und eine Möglichkeit vorzusehen, bei welcher ein geschlossener Regelkreis in Bezug auf die Leistung des Motorsystems genutzt wird, wodurch eine verbesserte Leistungsregelung bei reduziertem Verbrauch durchgeführt werden kann.

Dazu sieht die vorliegende Erfindung vor, dass basierend auf einem Wirkungsgrad des Gesamtsystems die geforderte mechanische Sollleistung angepasst wird. Ferner sieht die vorliegende Erfindung auch vor, dass ein Massenträgheitsmoment des Verbrennungsmotors bei der Einstellung des von dem Verbrennungsmotor geforderten Drehmoments genutzt wird.

Die erfindungsgemäße Motorsteuerung sieht schließlich vor, dass der Generator basierend auf der Solldrehzahl für den Generator und basierend auf dem Ausgangsdrehmoment des Verbrennungsmotors gesteuert wird.

Die vorliegende Erfindung ermöglicht durch den beschriebenen Aufbau eine Steuerung des Motorsystems mit einem minimal möglichen Kraftstoffverbrauch. Dabei kann gleichzeitig eine gewünschte elektrische Leistung erzeugt werden. Ferner kann die Leistungssteuervorrichtung einer gewünschten Solleistungsänderung rasch folgen. Dies ist z.B. wichtig, weil Leistung die beim Bremsen durch Rekuperation entsteht, sofort durch eine entsprechende Leistungsreduktion ausgeglichen werden muss, wenn gleichzeitig eine Begrenzung auf eine maximale Ladeleistung des Batteriesystems wirksam wird.

Vorteilhafte Ausführungsformen und Weiterbildungen ergeben sich aus den Unteransprüchen sowie aus der Beschreibung unter Bezugnahme auf die Figuren.

In einer Ausführungsform weist die Recheneinrichtung einen ersten Kennlinienspeicher auf, welcher eine Kennlinie aufweist, die zu einer vorgegebenen mechanischen Leistung die optimale Drehzahl für den Verbrennungsmotor aufweist, wobei die Recheneinrichtung ausgebildet ist, basierend auf der mechanischen Sollleistung die optimale Drehzahl auszuwählen, wobei die Recheneinrichtung einen Drehzahlbegrenzer aufweist, welcher ausgebildet ist, die ausgewählte optimale Drehzahl basierend auf der maximal zulässigen Drehzahl zu begrenzen, wobei die Recheneinrichtung einen Ratenbegrenzer aufweist, welcher dazu ausgebildet ist, die begrenzte Drehzahl zu erhalten und die Änderungsrate der begrenzten Drehzahl basierend auf einer vorgegebenen maximalen Änderungsrate zu begrenzen, und wobei die Recheneinrichtung einen ersten Tiefpassfilter aufweist, welcher ausgebildet ist, die änderungsratenbegrenzte Drehzahl tiefpasszufiltern und als die Solldrehzahl für den elektrischen Generator auszugeben. Unter der optimalen Drehzahl für den Verbrennungsmotor ist im Zusammenhang mit dem ersten Kennlinienspeicher diejenige Drehzahl zu einer mechanischen Leistung zu verstehen, bei welcher der Verbrennungsmotor den geringsten Kraftstoffverbrauch aufweist. Die Begrenzung der maximalen Änderungsrate erlaubt es, die Schwungmassen in Verbrennungsmotor und dem Generator zu berücksichtigen und der Tiefpassfilter verhindert einen Ruck in dem Antrieb zwischen dem Verbrennungsmotor und dem Generator, da eine abrupte Drehzahländerung verhindert wird.

In einer Ausführungsform weist die Recheneinrichtung mindestens einen zweiten Kennlinienspeicher und eine Auswahleinrichtung auf, welche ausgebildet ist, auszuwählen, welcher Kennlinienspeicher für die Auswahl der optimalen Drehzahl genutzt wird. Werden weitere Kennlinienspeicher vorgesehen, können in den weiteren Kennlinienspeichern Kennlinien abgelegt werden, die z.B. andere Optimierungsziele aufweisen. Beispielsweise kann eine der weiteren Kennlinien dahingehend optimiert sein, den Katalysator des Verbrennungsmotors möglichst schnell aufzuheizen oder eine verbesserte Dynamik des Motorsystems bereitzustellen. Weitere Optimierungsziele können je nach Anwendungsfall ebenfalls definiert werden.

In einer Ausführungsform weist die Recheneinrichtung einen Divisionsblock auf, welcher dazu ausgebildet ist, mechanische Sollleistung durch einen ersten konstanten Wert, insbesondere durch 2*π/60, und durch die Solldrehzahl für den elektrischen Generator zu dividieren und das Ergebnis der Division als Ausgangsdrehmoment des Verbrennungsmotors auszugeben. Dies ermöglicht eine einfache Umrechnung der angeforderten mechanischen Sollleistung in ein Ausgangsdrehmoment des Verbrennungsmotors.

In einer Ausführungsform weist die Trägheitskompensationseinrichtung einen Speicher zum Speichern eines Wertes der Solldrehzahl auf und ist dazu ausgebildet, jeweils aus einem aktuellen Wert der Solldrehzahl und einem gespeicherten älteren Wert der Solldrehzahl eine Änderung der Solldrehzahl zu berechnen, wobei die Trägheitskompensationseinrichtung eine Multiplikationseinrichtung aufweist, welche dazu ausgebildet ist, den berechneten Wert der Änderung der Solldrehzahl mit einem zweiten konstanten Wert, insbesondere mit 2*π/60, und mit einem Wert des Massenträgheitsmoments des Verbrennungsmotors und des Generators zu multiplizieren. Dies ermöglicht es auf einfache Art das durch den Verbrennungsmotor auf die Welle des Generators übertragene Drehmoment zu berechnen. Ist dieses Drehmoment bekannt, kann dies in der Ansteuerung des Generators berücksichtigt werden und ein Überschwingen oder ein Untersteuern vermieden werden.

In einer Ausführungsform weist die Effizienzberechnungseinrichtung mindestens einen dritten Kennlinienspeicher auf, in welchem Kennlinien für den Wirkungsgrad des Generators und den Wirkungsgrad eines mit dem Generator gekoppelten Inverters des Motorsystems über die Drehzahl und das Drehmoment gespeichert sind, wobei die Effizienzberechnungseinrichtung ausgebildet ist, einen theoretischen Wirkungsgrad des Motorsystems basierend auf aus dem mindestens einen dritten Kennlinienspeicher für die Solldrehzahl für den elektrischen Generator und das Ausgangsdrehmoment des Verbrennungsmotors ausgelesenen Wirkungsgraden zu berechnen. In einer weiteren Ausführungsform sind der Verbrennungsmotor und der Generator nicht über eine Welle sondern über ein Getriebe miteinander gekoppelt. In dieser Ausführungsform ist ein weiterer dritter Kennlinienspeicher vorgesehen, in welchem eine Kennlinie mit dem Wirkungsgrad des Getriebes über Drehzahl und Drehmoment abgelegt ist. Dies ermöglicht eine exakte Berechnung des Wirkungsgrads des Motorsystems.

In einer Ausführungsform ist die Effizienzberechnungseinrichtung ausgebildet, eine Ausgangsleistung des Motorsystems durch eine Multiplikation der Batteriespannung mit dem Generatorstrom zu berechnen. Ferner ist die Effizienzberechnungseinrichtung ausgebildet, eine Eingangsleistung des Motorsystems aus der Solldrehzahl für den elektrischen Generator und dem Ausgangsdrehmoment des Verbrennungsmotors zu berechnen.

In einer Ausführungsform ist die Effizienzberechnungseinrichtung ausgebildet, von der berechneten Eingangsleistung das durch das Massenträgheitsmoment des Verbrennungsmotors auf eine Welle des Generators übertragene Drehmoment zu subtrahieren.

In einer Ausführungsform weist die Effizienzberechnungseinrichtung einen zweiten Tiefpassfilter auf, welcher ausgebildet ist, die berechnete Ausgangsleistung tiefpasszufiltern. Ferner weist die Effizienzberechnungseinrichtung einen dritten Tiefpassfilter auf, welcher ausgebildet ist, die berechnete Eingangsleistung des Motorsystems tiefpasszufiltern, wobei die Effizienzberechnungseinrichtung ausgebildet ist, einen auf Messwerten basierenden Wert für den Wirkungsgrad durch eine Division der gefilterten berechnete Ausgangsleistung und der gefilterten berechnete Eingangsleistung des Motorsystems zu berechnen. Die Berechnung und Verwendung des auf Messwerten basierenden Werts für den Wirkungsgrad hat den Vorteil, das der Momentenfehler, der in der Drehmomentkette in der Verbrennungsmotorsteuerung zwischen Signal tq_ICE und der Ausgabe an die Steller für Einspritzung, Drosselklappe und Zündwinkel auftritt, keine Auswirkung hat und daher der tatsächliche Wirkungsgrad berechnet wird.

In einer Ausführungsform weist die Effizienzberechnungseinrichtung einen ersten Hochpassfilter auf und ist ausgebildet, aus dem auf Sollwerten basierenden Wert für den Wirkungsgrad und einem auf Berechnungen basierenden Wert für den Wirkungsgrad des Motorsystems, welcher auf einer Hochpassfilterung des theoretischen Wirkungsgrads des Motorsystems mit dem Hochpassfilter basiert, den Gesamtwirkungsgrad des Motorsystems zu berechnen. Wird der auf Sollwerten basierenden Wert für den Wirkungsgrad durch ein Hochpassfilter geleitet und der auf Messwerten basierenden Wert für den Wirkungsgrad wird durch ein Tiefpassfilter mit gleicher Grenzfrequenz geleitet und beide gefilterten Signale werden miteinander addiert, kann die Genauigkeit des berechneten Wirkungsgrads erhöht werden.

In einer Ausführungsform weist die Drehzahlsteuereinrichtung einen Drehzahlregler auf, welcher ausgebildet ist, basierend auf der Solldrehzahl für den elektrischen Generator und einer aktuellen Drehzahl des elektrischen Generators ein Vorgabedrehmoment zu berechnen, wobei die Drehzahlsteuerung einen Sollstromregler aufweist, welcher ausgebildet ist, basierend auf der Summe des Vorgabedrehmoments und des Ausgangsdrehmoment des Verbrennungsmotors einen Sollstrom für den Generator zu berechnen, und wobei die Drehzahlsteuerung ferner einen Stromsteller aufweist, welcher ausgebildet ist, basierend auf dem berechneten Sollstrom den Strom in dem Generator zu stellen. Wird das Ausgangsdrehmoment des Verbrennungsmotors in die Berechnung des Sollstroms einbezogen, kann ein Überschwingen der Drehzahl bzw. des Drehmoments vermieden werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform einer erfindungsgemäßen Leistungssteuervorrichtung;
- Fig. 2: ein Blockschaltbild einer Ausführungsform einer erfindungsgemäßen Motorsteuervorrichtung;
- Fig. 3: ein Blockschaltbild einer Ausführungsform eines erfindungsgemäßen Motorsystems;
- Fig. 4: eine schematische Darstellung einer Ausführungsform einer erfindungsgemäßen Recheneinrichtung;
- Fig. 5: eine schematische Darstellung einer Ausführungsform einer erfindungsgemäßen Trägheitskompensationseinrichtung;
- Fig. 6: eine schematische Darstellung einer Ausführungsform einer erfindungsgemäßen Effizienzberechnungseinrichtung;
- Fig. 7: eine Kennlinie für die Leistung eines Motorsystems;
- Fig. 8: eine weitere Kennlinie für die Leistung eines Motorsystems;
- Fig. 9: ein Diagramm einer Drehzahländerung in einem erfindungsgemäßen Motorsystem;
- Fig. 10: ein weiteres Diagramm der Drehzahländerung in einem erfindungsgemäßen Motorsystem;
- Fig. 11: ein weiteres Diagramm der Drehzahländerung in einem erfindungsgemäßen Motorsystem; und
- Fig. 12: ein bekanntes Motorsystem.

In allen Figuren sind gleiche bzw. funktionsgleiche Elemente und Vorrichtungen - sofern nichts Anderes angegeben ist - mit denselben Bezugszeichen versehen worden.

### Ausführungsformen der Erfindung

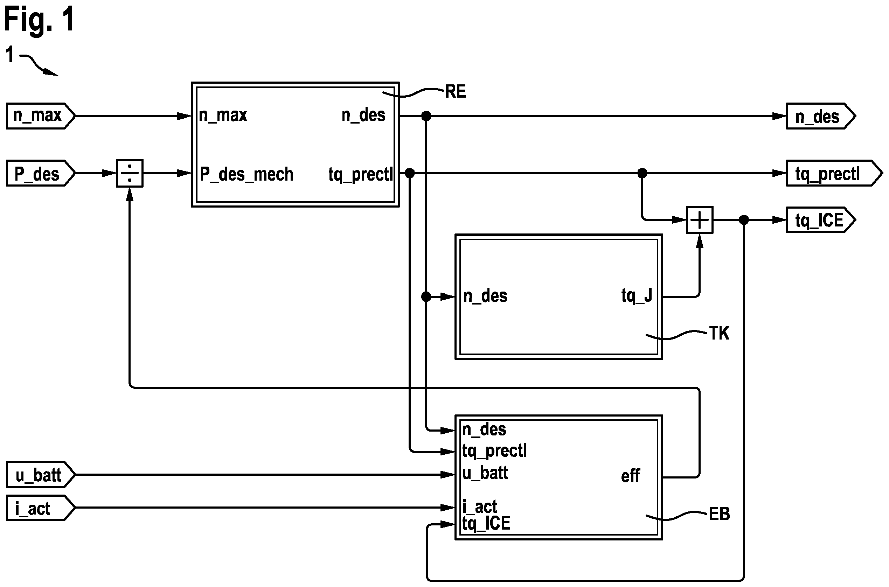

Fig. 1 zeigt ein Blockschaltbild einer Ausführungsform einer erfindungsgemäßen Leistungssteuervorrichtung 1.

Die Leistungssteuervorrichtung 1 weist eine Recheneinrichtung RE auf, die als Eingangsgrößen die maximale Drehzahl n_max und die gewünschte mechanische Leistung P_des_mech erhält. Die gewünschte mechanische Leistung P_des_mech wird aus der gewünschten Leistung P_des berechnet, die dazu durch den Wirkungsgrad eff des Motorsystems 3 dividiert wird.

Die Recheneinrichtung RE berechnet aus der maximalen Drehzahl n_max und der gewünschten mechanische Leistung P_des_mech eine gewünschte Drehzahl bzw. eine Solldrehzahl n_des für den Generator G und ein Drehmoment tq_prectl, welches der Verbrennungsmotor M liefert.

Die Solldrehzahl n_des wird der Trägheitskompensationseinrichtung TK bereitgestellt, welche basierend auf der Solldrehzahl n_des ein Drehmoment tq_J berechnet. Das Drehmoment tq_J ist beim Beschleunigen des Verbrennungsmotors M positiv, und beim Bremsen des Verbrennungsmotors M negativ und beschreibt den Drehmomentunterschied zwischen inneren Verbrennerdrehmoment und dem Drehmoment, das an der Kurbelwelle des Verbrennungsmotors M abgegeben wird.

Das Drehmoment tq_J wird zu dem Drehmoment tq_prectl, welches der Verbrennungsmotor M liefert, addiert und die Summer ergibt das Solldrehmoment tq_ICE für den Verbrennungsmotor M.

D.h. beim Bremsen wird das innere Drehmoment des Verbrennungsmotors M durch Androsseln und Zündwinkelverstellung reduziert und beim Beschleunigen wird das Drehmoment des Verbrennungsmotors M durch Öffnen der Drosselklappe erhöht, sofern diese nicht bereits vollständig offen ist.

Die Effizienzberechnungseinrichtung EB berechnet den Wirkungsgrad eff unter anderem aus aktueller elektrischer Ausgangsleistung Pout und mechanischer Eingangsleistung Pin.

Zur Berechnung des Wirkungsgrades eff, welcher benötigt wird, um die mechanische Sollleistung P_des_mech zu berechnen, werden der Effizienzberechnungseinrichtung EB die Solldrehzahl n_des für den Generator G und das Drehmoment tq_prectl, welches der Verbrennungsmotor M liefert, bereitgestellt. Ferner werden der Effizienzberechnungseinrichtung EB eine Batteriespannung u_batt, ein Generatorstrom i_act sowie das Solldrehmoment tq_ICE für den Verbrennungsmotor M bereitgestellt.

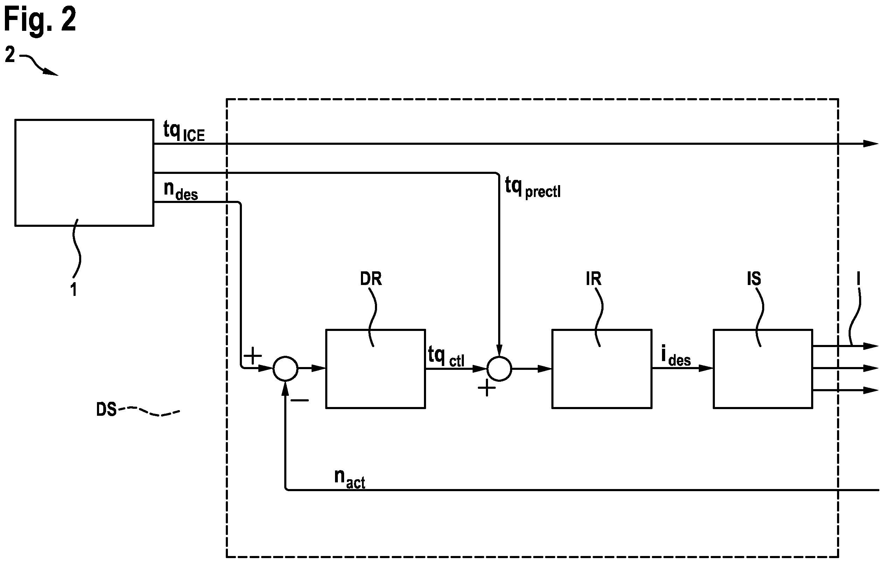

Fig. 2 zeigt ein Blockschaltbild einer Ausführungsform einer erfindungsgemäßen Motorsteuervorrichtung 2.

Die Motorsteuervorrichtung 2 weist eine Leistungssteuervorrichtung 1 gemäß der vorliegenden Erfindung auf, die mit einer Drehzahlsteuereinrichtung DS gekoppelt ist und dieser das Solldrehmoment tq_ICE für den Verbrennungsmotor M, die Solldrehzahl n_des für den Generator G und das Drehmoment tq_prectl, welches der Verbrennungsmotor M liefert, bereitstellt.

Die Drehzahlsteuereinrichtung DS weist einen Drehzahlregler DR auf, welcher in einer Ausführungsform z.B. als PI-Regler ausgeführt sein kann und welcher basierend auf einer gemessenen aktuellen Drehzahl n_{act} und der Solldrehzahl n_des ein Vorgabedrehmoment tq_{ctl} für den Generator G berechnet. Aus der Summe dieses Vorgabedrehmoments tq_{ctl} und des Drehmoments tq_prectl, welches der Verbrennungsmotor M liefert, berechnet ein Sollstromregler einen Sollstrom I_{des} für den Generator G. Schließlich stellt ein Stromsteller IS in den einzelnen Phasen des Generators den entsprechenden Strom I.

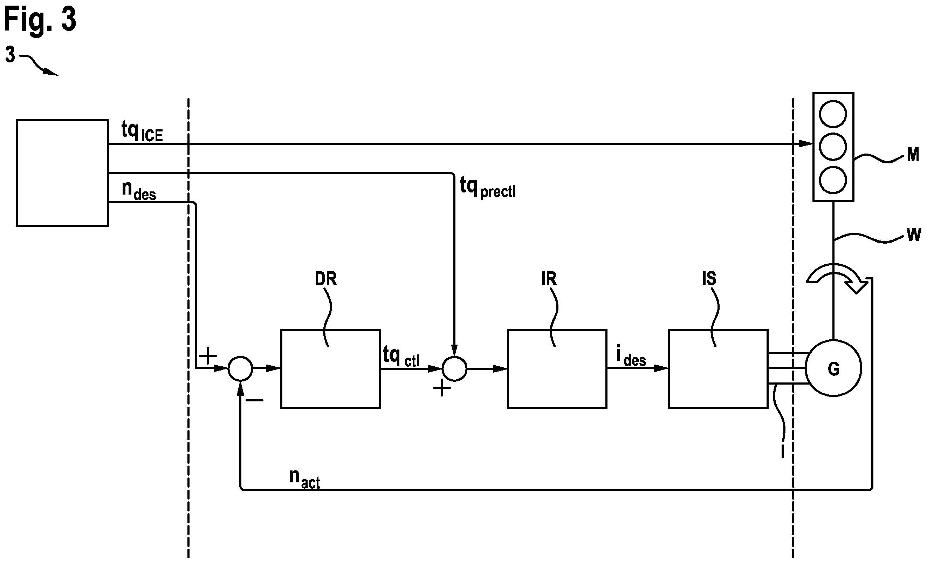

Fig. 3 zeigt ein Blockschaltbild einer Ausführungsform eines erfindungsgemäßen Motorsystems 3. Das Motorsystem 3 weist die Motorsteuervorrichtung 2 der Fig. 2 auf. Ferner weist das Motorsystem 3 einen Verbrennungsmotor M auf, dem das Solldrehmoment tq_ICE bereitgestellt wird. Das Motorsystem 3 weist schließlich noch einen Generator G auf, der über eine Welle W mechanisch mit dem Verbrennungsmotor M gekoppelt ist und von dem Stromsteller IS der Motorsteuervorrichtung 2 angesteuert wird. Der Verbrennungsmotor M ist lediglich symbolisch dargestellt und kann in einer Ausführungsform z.B. ein Motorsteuergerät aufweisen.

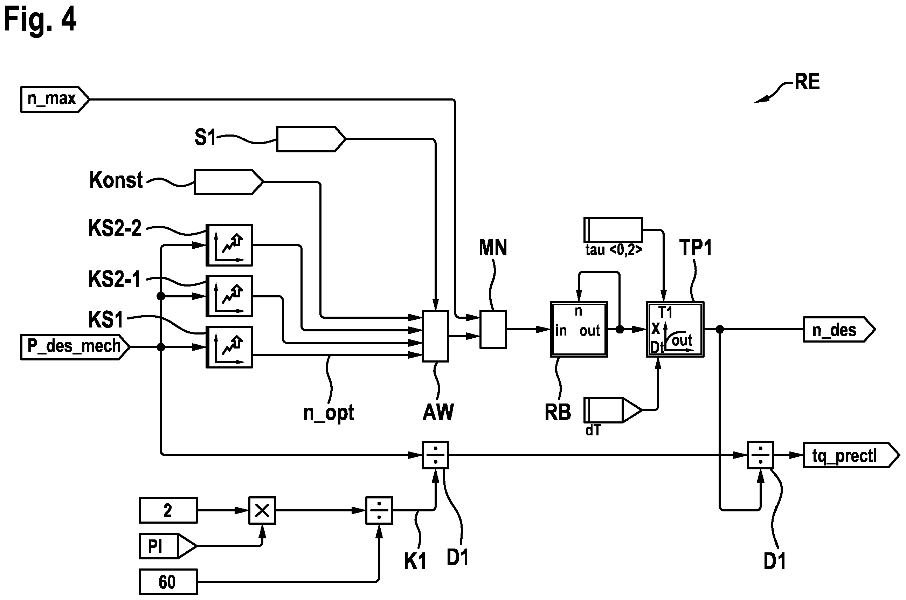

Fig. 4 zeigt eine schematische Darstellung einer Ausführungsform einer erfindungsgemäßen Recheneinrichtung RE.

Die Recheneinrichtung RE der Fig. 4 weist einen ersten Kennlinienspeicher KS1 und zwei zweite Kennlinienspeicher KS2-1, KS2-2 auf, welche mit einem Eingang für die mechanische Sollleistung P_des_mech gekoppelt sind, um aus den Kennlinienspeichern KS1, KS2-1 und KS2-2 zu einer jeweiligen mechanische Sollleistung P_des_mech jeweils die optimale Drehzahl n_opt für den Verbrennungsmotor M zu bestimmen. Die Ausgänge der Kennlinienspeicher KS1, KS2-1 und KS2-2 und eine konstanter Drehzahlwert konst sind jeweils mit einer Auswahleinrichtung AW gekoppelt, die basierend auf einem ersten Auswahlsignal S1 einen der eingehenden Drehzahlwerte an einen Drehzahlbegrenzer MN weiterleitet, der die Drehzahl auf die maximal zulässige Drehzahl begrenzt. Die begrenzte Drehzahl wird einem Ratenbegrenzer RB zugeleitet, der die Änderungsrate der Drehzahl begrenzt. Diese ist notwendig, weil einerseits durch die Schwungmassen des Verbrennungsmotors M und des Generators G keine beliebig schnelle Drehzahländerung möglich ist und andererseits jede Drehzahländerung die Istleistung durch die Schwungmasse in Gegenrichtung zum Sollleistungswunsch verändert. Daher muss mit der höhe der aktuellen Drehzahl die Änderungsrate kleiner werden.

Die änderungsratenbegrenzte Drehzahl wird an einen ersten Tiefpassfilter TP1 weitergeleitet, welcher die Solldrehzahl n_des ausgibt. Dies dient dazu, einen Ruck im Antrieb zwischen Verbrennungsmotor M und dem Generator G zu vermeiden.

Mit Hilfe der Auswahleinrichtung AW kann die Auswahl der optimalen Drehzahl n_opt umgeschaltet werden. So können in den zweiten Kennlinienspeichern KS2-1, KS2-2 jeweils Kennlinien hinterlegt sein, die für unterschiedliche Ziele optimiert wurden. Die Kennlinie, welche in dem ersten Kennlinienspeicher KS1 hinterlegt ist, dient der Leistungsregelung bei einem optimalen Wirkungsgrad, also bei möglichst geringem Kraftstoffverbrauch.

Die in dem zweiten Kennlinienspeicher KS2-1 hinterlegte Kennlinie kann z.B. dem heizen des Katalysators dienen. Um ein rasches Aufheizen eines Katalysators des Verbrennungsmotors M und damit eine schadstoffarme Nachstartphase zu ermöglichen kann die Kennlinie z.B. ein Betreiben des Verbrennungsmotors M bei höheren Drehzahlen vorsehen.

Die in den zweiten Kennlinienspeichern KS2-2 hinterlegte Kennlinie kann dem Antriebssystem z.B. eine höhere Dynamik verleihen. Um eine höhere Dynamik des Antriebssystems zu ermöglichen, stellt die Kennlinie in dem Kennlinienspeicher KS2-2 nicht den optimalen Wirkungsgrad ein. Durch die höhere Steilheit dieser Kennlinie und vor allem durch die bestehende signifikante Momentenreserve ist eine Leistungsänderung zusätzlich zur Drehzahländerung auch durch die viel raschere Drehmomentänderung möglich. Dies ist bei seriellen Hybriden notwendig, die nicht die maximale Antriebsleistung aus der Hochvoltbatterie zur Verfügung stellen können und eine rasche Leistungserhöhung aus dem Verbrennungsmotor zur Verfügung stellen müssen. Ein Grund dafür, dass die Leistungsabgabe der Batterie geringer ist als der Bedarf des Antriebs kann sein, dass der maximale Strom der Hochvoltbatterie geringer ist als der vom Antrieb aufgenommene Strom. Dies kann konstruktiv absichtlich so ausgelegt sein oder temporär der Fall sein, wenn z.B. der SOC und damit die Spannung der Hochvoltbatterie niedrig sind. Schließlich kann mit Hilfe einer Solldrehzahlvorgabe über den konstanten Wert konst eine konstante Drehzahl vorgegeben werden.

Ferner wird in der Recheneinrichtung RE der Fig. 4 durch eine Division in dem Divisionsblock D1 der mechanischen Sollleistung P_des_mech durch die aktuelle Solldrehzahl n_des und durch 2*PI/60 das Ausgangsdrehmoment tq_prectl berechnet, so dass jederzeit die mechanische Sollleistung P_des_mech gestellt wird.

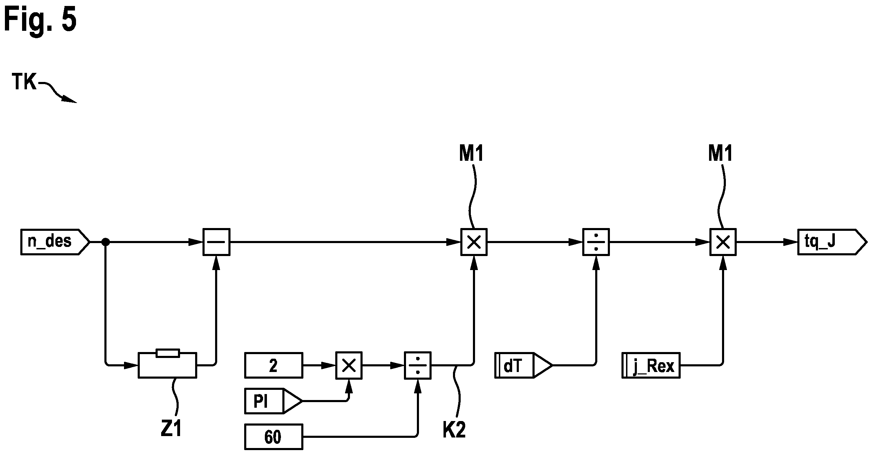

Fig. 5 zeigt eine schematische Darstellung einer Ausführungsform einer erfindungsgemäßen Trägheitskompensationseinrichtung TK.

Zur Berechnung des Drehmoments tq_J, welches auf Grund der Massenträgheit des Verbrennungsmotors M und des Generators G auf den Generator G übertragen wird, wird bei einer Drehzahländerung die Änderung der Winkelgeschwindigkeit des Verbrennungsmotors M mit dem Massenträgheitsmoment j_Rex des Verbrennungsmotors M und des Generators G multipliziert. Zur Berechnung der Änderung der Winkelgeschwindigkeit wird die Drehzahl differenziert und das Ergebnis in dem Multiplikationsblock M1 mit 2*PI/60 multipliziert. Das Differenzieren geschieht z.B. durch eine Subtraktion eines gespeicherten Drehzahlwertes von einem aktuellen Drehzahlwert.

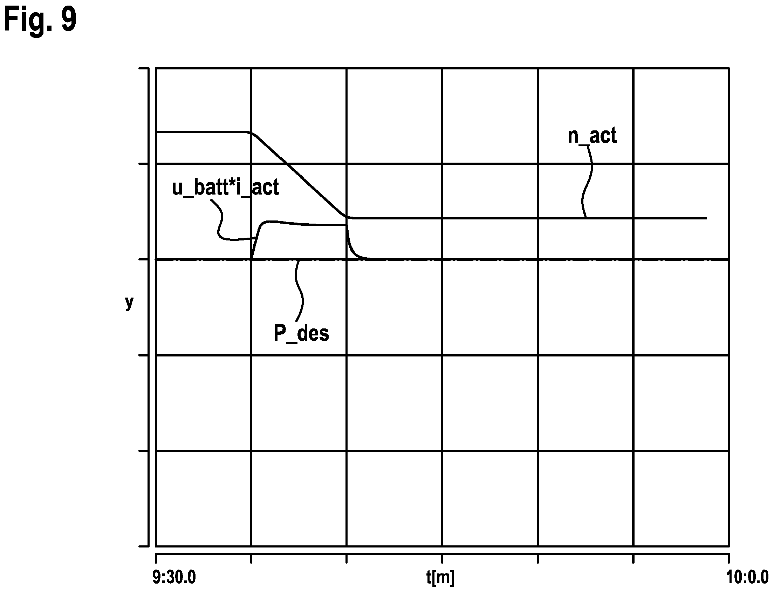

Die Fig. 9 - 11 zeigen Diagramme für die Ausgangsleistung des Motorsystems 3 mit und ohne die Trägheitskompensation durch die Trägheitskompensationseinrichtung TK.

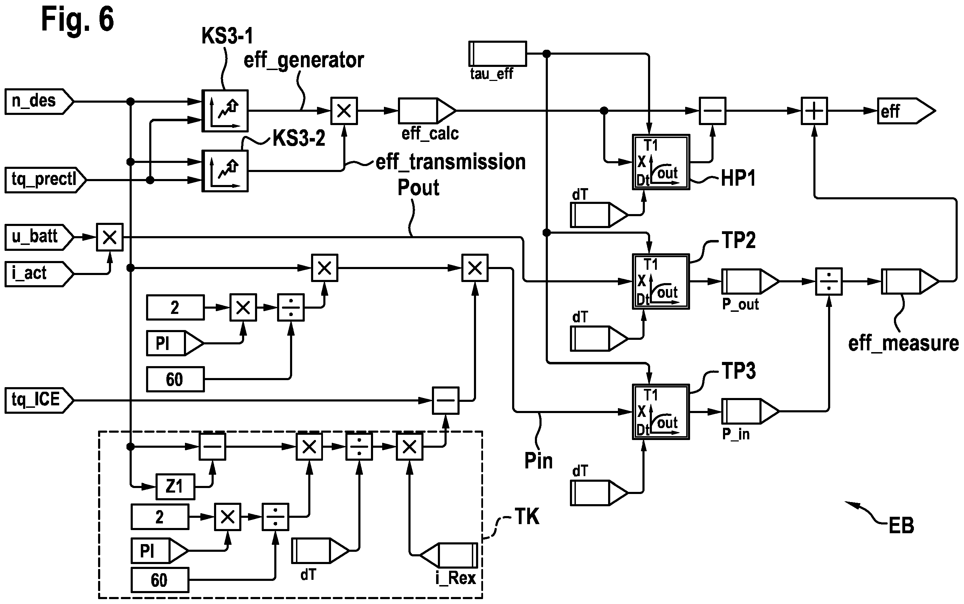

Fig. 6 zeigt eine schematische Darstellung einer Ausführungsform einer erfindungsgemäßen Effizienzberechnungseinrichtung EB.

Der Wirkungsgrad eff_generator des Generators G zusammen mit dem Wirkungsgrad eff_transmission eines Inverters, der den Generator G ansteuert, ist bekannt und wird in den dritten Kennlinienspeichern KS3-1, KS3-2 über die Drehzahl und das Drehmoment abgelegt.

Falls in einer Ausführungsform der Verbrennungsmotor M und der Generator G nicht über eine Welle miteinander verbunden sind sondern über ein Getriebe oder einen Riemen, so kann der Wirkungsgrad dieser Übersetzung ebenfalls in einem weiteren Kennlinienspeicher gespeichert werden. Die Wirkungsgrade aus den beiden bzw. drei Kennlinienspeichern KS3-1, KS3-2 werden miteinander multipliziert und ergeben so den berechneten Wirkungsgrad eff_calc, welcher nur auf Berechnungen basiert.

Parallel dazu wird der Wirkungsgrad eff_measure, welcher auf Messwerten basiert, aus Ausgangsleistung Pout und Eingangsleistung Pin berechnet. Die Ausgangsleistung Pout wird aus den gemessenen Ausgangssignalen Generatorstrom i_act und Hochvoltspannung u_batt berechnet. Die Eingangsleistung Pin wird aus Solldrehzahl n_des und dem Drehmoment des Verbrennungsmotors tq_ICE berechnet. Vom Drehmoment tq_ICE wird noch das Drehmoment subtrahiert, welches durch das Massenträgheitsmoment j_Rex verursacht wird. Dazu ist in der Effizienzberechnungseinrichtung EB eine Struktur vorgesehen, welche der Trägheitskompensationseinrichtung TK gleicht. In einer weiteren Ausführungsform kann das Ausgangssignal tq_J von der Trägheitskompensationseinrichtung TK der Effizienzberechnungseinrichtung EB bereitgestellt werden.

Für den Verbrennungsmotor M wird bei beiden Methoden ein Wirkungsgrad von 1 angenommen, weil nicht die Kraftstoffmasse sondern das Drehmoment tq_ICE als Eingang verwendet wird. tq_ICE stellt das innere Verbrennungsmotormoment dar und wird genutzt, um daraus Drosselklappenstellung, Einspritzung und Zündwinkel für den Verbrennungsmotor M zu berechnen.

Die Berechnung und Verwendung des Wirkungsgrads eff_measure hat den Vorteil, dass der Momentenfehler, der in der Drehmomentkette zwischen dem Signal tq_ICE und der Ausgabe an die Steller für Einspritzung, Drosselklappe und Zündwinkel auftritt, keine Auswirkung hat und daher der tatsächliche Wirkungsgrad berechnet wird. Der Nachteil des Wirkungsgrades eff_measure ist, dass seine Berechnung hauptsächlich mit Istwerten erfolgt. Für die nachgeschaltete Steuerung darf der Wirkungsgrad eff_measure nicht verwendet werden, weil die Istwertmitkopplung zu Schwingungen führen könnte. Der Nachteil des Wirkungsgrades eff_calc ist seine Ungenauigkeit bezüglich Momentenfehlern bei der Steuerung des Verbrennungsmotors M.

Die Nachteile beider Wirkungsgrade können durch eine Kombination beider Signale behoben werden. Dabei wird eff_calc durch ein ersten Hochpassfilter HP1 gefiltert und eff_measure wird tiefpassgefiltert. Da die Berechnung des Wirkungsgrades eff_measure aus einer Division von Eingangsleistung Pin und Ausgangsleistung Pout besteht, wird nicht eff_measure selbst gefiltert, sondern Eingangsleistung Pin und Ausgangsleistung Pout getrennt in den Tiefpassfiltern TP2, TP3 tiefpassgefiltert, um bei kleinen Leistungen nicht Rechenfehler bei ungleichphasig schwingenden Leistungen zu erzeugen. Der Hochpassfilter TP1 und die Tiefpassfilter TP2, TP3 weisen die gleiche Grenzfrequenz auf und beide gefilterten Signale werden addiert. Das Ergebnis der Addition ist der Wirkungsgrad eff.

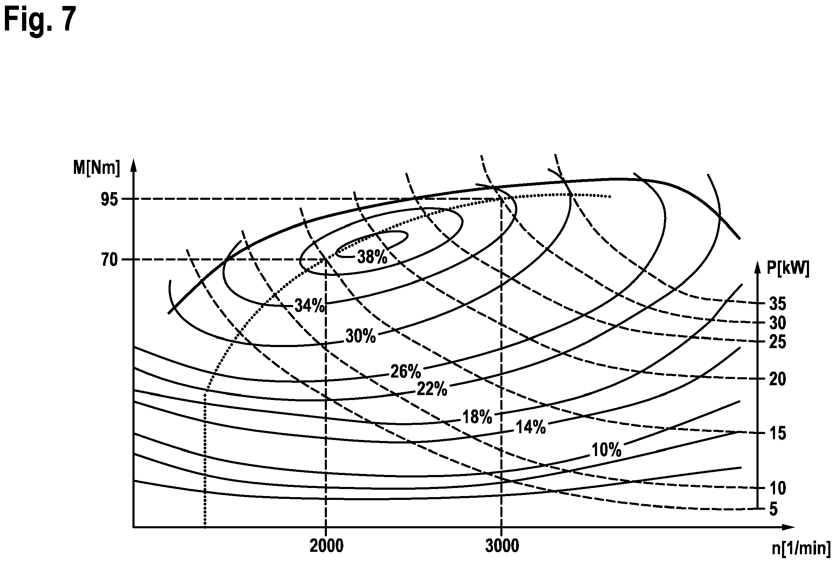

Fig. 7 zeigt eine Kennlinie für die Leistung eines beispielhaften Motorsystems 3 für einen optimierten Kraftstoffverbrauch, also für einen optimierten Wirkungsgrad. Für andere Ausführungsformen des Motorsystems 3 können die Werte von den in dem Diagramm der Fig. 7 gezeigten Werten abweichen.

Die Abszissenachse des Diagramms zeigt die Drehzahl von etwa 500 Umdrehungen pro Minute [1/min] bis etwa 4500 Umdrehungen pro Minute [1/min].

Die linke Ordinatenachse des Diagramms zeigt das Drehmoment in Newtonmeter [Nm] und die rechte Ordinatenachse des Diagramms zeigt die Leistung in Kilowatt [kW]. Dabei verlaufen die Linien gleicher Leistung von der rechten Ordinatenachse bogenförmig nach oben.

Konzentrischen Linien bzw. Ellipsen in dem Diagramm stellen Linien gleichen Wirkungsgrades dar. Dabei liegt der Mittelpunkt der konzentrischen Linien bei etwa 2200 Umdrehungen pro Minute und bei 75 Nm und wird in etwa von der Linie einer Leistung von 20kW geschnitten.

Die Linien gleichen Wirkungsgrads werden bei der Applikation des Motorsystems 3, also bei der Abstimmung des Motorsystems 3 während der Entwicklung des Motorsystems 3, aus der Multiplikation aller Wirkungsgrade (Wirkungsgrade von Verbrennungsmotor M, Generator G, Inverter und falls vorhanden Getriebe) berechnet.

Die gepunktete Kennlinie soll die konzentrischen Linien gleichen Wirkungsgrades mittig so schneiden, dass bei jeder Solleistung der beste Wirkungsgrad erzielt wird. Es ist jedoch auch möglich die Kennlinie auf andere Werte zu legen, wenn Gründe wie die Geräuschentwicklung oder eine höhere Dynamik bei Leistungsänderung dafür sprechen.

Die hier gezeigte Linie weicht bei einer niedrigen Drehzahl von ca. 1000 vom optimalen Wirkungsgrad ab, weil auch kleine Leistungen und Leistung 0 gestellt werden müssen und dabei der Verbrennungsmotor M weiterdrehen muss. D.h. die sonst übliche Leerlaufdrehzahl wird durch den linken senkrechten Teil der Kennlinie dargestellt. Durch diesen Teil der Kennlinie ist ein kompliziertes Umschalten zwischen Leerlaufregler und Leistungsregler unnötig und auf den in der Motorsteuerung üblichen Leerlaufregler kann verzichtet werden. Der Leerlauf kann somit durch Anforderung von Sollleistung P_des=0 abgedeckt werden.

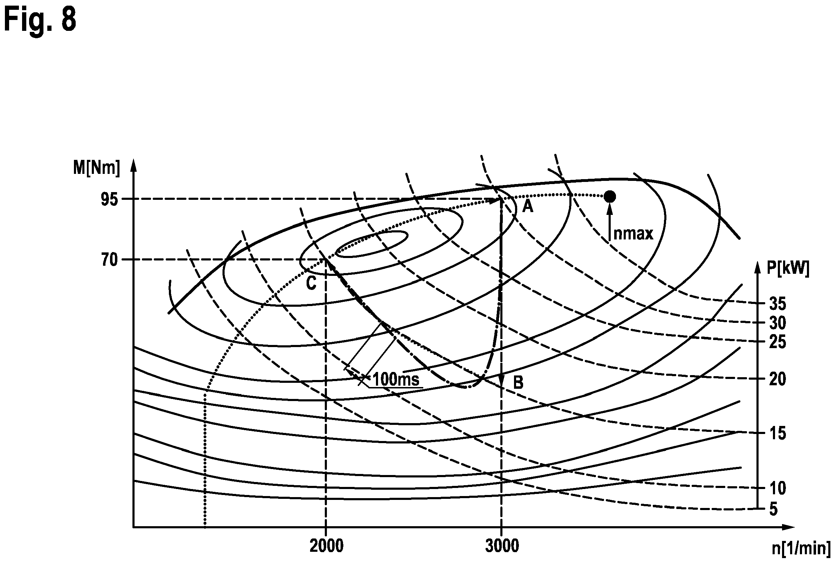

Fig. 8 zeigt eine Kennlinie für eine Leistungsreduktion von 30kW auf 15kW eines beispielhaften Motorsystems 3. Für andere Ausführungsformen des Motorsystems 3 können die Werte von den in dem Diagramm der Fig. 7 gezeigten Werten abweichen.

Gleichzeitig zur Leistungsreduktion von 30kW auf 15kW findet eine Änderung der Drehzahl anhand der Kennlinie der Fig. 7 statt. Die rasche Leistungsreduktion kann hier durch eine rasche Reduktion des Drehmomentes erfolgen. Die Motorsteuerung des Verbrennungsmotors M kann z.B. die Drosselklappe stark androsseln, den Zündwinkel nach spät verstellen und/oder die Einspritzung kurzzeitig abschalten. Gleichzeitig wird die Drehzahl langsam verringert. In dem Maß, indem die verringerte Drehzahl eine Leistungsreduktion bewirkt, kann das Drehmoment wieder erhöht werden.

In Fig. 8 ist die Leistungsreduktion durch die gepunktete Linie (angeforderter Arbeitspunkt) und die Strichpunkt-Kurve (tatsächlich gestellter Arbeitspunkt) dargestellt. Die gepunktete Linie verläuft ausgehend von der Kennlinie der Fig. 7 bei 3000 1/min und 95Nm senkrecht nach unten bis zu ca. 50Nm und von dort bis zu 2000 1/min und 70 Nm.

Durch diese Schwungmassenkompensation werden dynamisch Arbeitspunkte ausgegeben, die von der Kennlinie der Fig. 7 abweichen. Der Sollleistungsreduktion kann aber durch diese Maßnahme wesentlich schneller Folge geleistet werden.

Fig. 9 zeigt ein Diagramm der Drehzahländerung in einem erfindungsgemäßen Motorsystem 3 ohne Schwungmassenkompensation durch die Trägheitskompensationseinrichtung TK.

Die Abszissenachse des Diagramms zeigt die Zeit in Minuten von 9:30 bis 10:00, also für 30 Sekunden. Die Ordinatenachse zeigt keine Einheit, da sowohl die Drehzahl, als auch die angeforderte Leistung und die tatsächliche Leistung des Motorsystems 3 dargestellt sind. Zum Verständnis sind die Einheiten aber irrelevant. Der Vergleich zwischen den drei Diagrammen der Figs. 9 - 11 lässt den Einfluss der Trägheitskompensationseinrichtung TK deutlich erkennen.

Bei einem Motorsystem 3 mit einem Massenträgheitsmoment von 0,5kgm² wird die Drehzahl innerhalb von 5 Sekunden von 9:35 bis 9:40 von 4500Upm auf 3500Upm mit einer Änderungsrate von 200Upm/s abgesenkt. Dies wird durch die obere Kurve des Diagramms veranschaulicht. Während der Drehzahlreduktion entsteht eine Leistung von ca. 4kW in dem Motorsystem 3, die sich als Abweichung zwischen Solleistung P_des und der Istleistung, welche aus u_batt*i_act berechnet wird, zeigt.

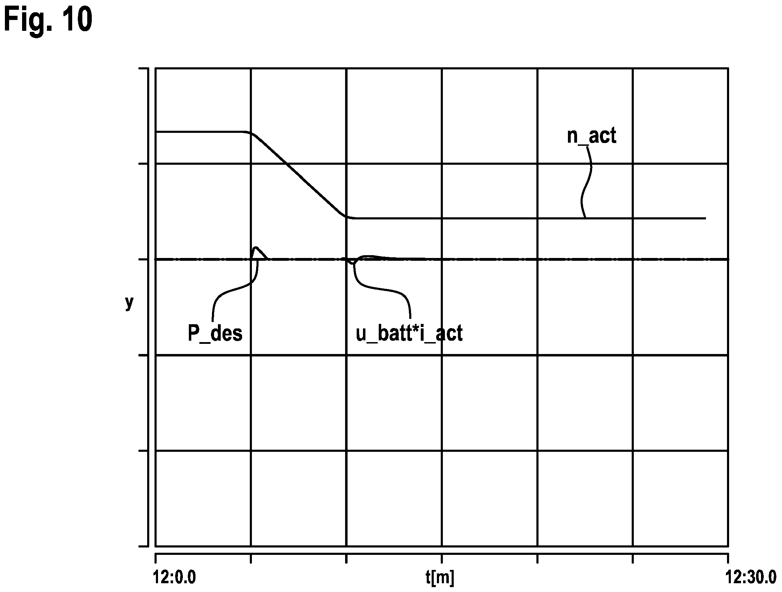

Fig. 10 zeigt ein weiteres Diagramm der Drehzahländerung in einem erfindungsgemäßen Motorsystem 3 mit Schwungmassenkompensation durch die Trägheitskompensationseinrichtung TK. Die Achsen und der Drehzahlverlauf gleichen denjenigen aus Fig. 9.

In Fig. 10 wird das Verhalten des Motorsystems 3 mit einer Schwungmassenkompensation von j_Rex=0.5kgm² gezeigt. Zu sehen ist, dass nahezu keine Abweichung zwischen Solleistung und Istleistung entsteht.

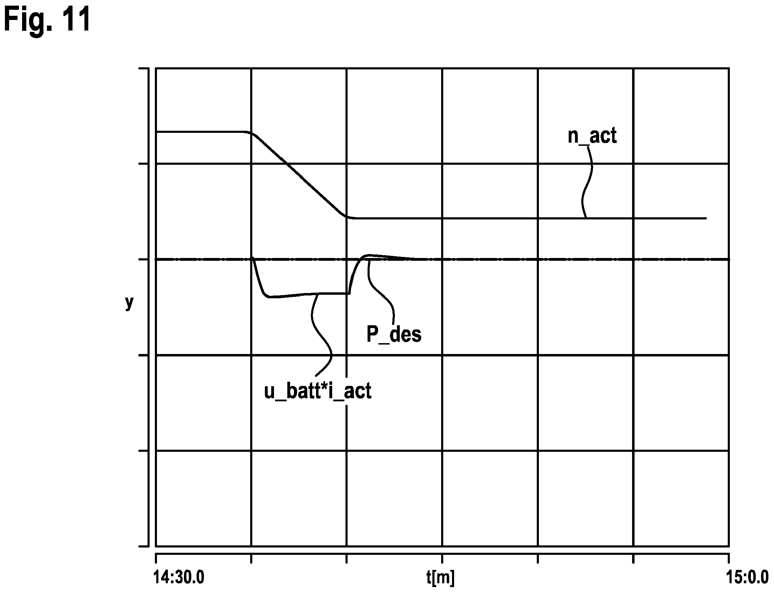

Fig. 11 zeigt ein weiteres Diagramm der Drehzahländerung in einem erfindungsgemäßen Motorsystem 3 mit Schwungmassenkompensation durch die Trägheitskompensationseinrichtung TK. Die Achsen und der Drehzahlverlauf gleichen denjenigen aus Fig. 9. Allerdings wurde die Schwungmasse j_Rex mit j_Rex=1kgm² eingestellt, was zu einer deutlichen Überkompensation führt. Dies ist daran zu erkennen, dass während dem Abfall der Drehzahl die tatsächlich eingestellt Leistung etwa 4kW unter der angeforderten Leistung liegt.

Die Diagramme der Figs. 9 - 11 wurden für eine mögliche Ausführungsform eines Motorsystems 3 aufgenommen und erklärt. Für weitere Ausführungsformen des Motorsystems 3 können die tatsächlichen Werte von den in den Diagrammen der Figs. 9 - 11 gezeigten Werten abweichen.

## Patentansprüche

1. Leistungssteuervorrichtung (1) für eine Motorsteuervorrichtung (2) für ein Motorsystem (3) mit einem Verbrennungsmotor (M) und einem mit dem Verbrennungsmotor (M) gekoppeltem elektrischen Generator (G),
mit einer Recheneinrichtung (RE), welche ausgebildet ist, eine Sollleistung (P_des) für das Motorsystem (3) und eine maximal zulässige Drehzahl (n_max) für den Verbrennungsmotor (M) zu empfangen und basierend auf der Solleistung (P_des) und der maximal zulässigen Drehzahl (n_max) eine Solldrehzahl (n_des) für den elektrischen Generator (G) und ein Ausgangsdrehmoment (tq_prectl) des Verbrennungsmotors (M) zu berechnen;
mit einer Trägheitskompensationseinrichtung (TK), welche dazu ausgebildet ist, basierend auf einer Änderung der Solldrehzahl (n_des) für den elektrischen Generator (G) ein durch ein Gesamtmassenträgheitsmoment (j_Rex) des Verbrennungsmotors (M) und des Generators (G) auf eine Welle des Generators (G) übertragenes Drehmoment (tq_J) zu berechnen und basierend auf dem übertragenen Drehmoment (tq_J) und dem berechneten Ausgangsdrehmoment (tq_prectl) des Verbrennungsmotors (M) ein Solldrehmoment (tq_ICE) für den Verbrennungsmotor (M) zu berechnen; und
mit einer Effizienzberechnungseinrichtung (EB), welche ausgebildet ist, basierend auf der Solldrehzahl (n_des) für den elektrischen Generator (G) und dem berechneten Ausgangsdrehmoment (tq_prectl) des Verbrennungsmotors (M) und einer Batteriespannung (u_bat) und einem Generatorstroms (i_act) einer Batterie des Motorsystems (3) und dem berechneten Solldrehmoment (tq_ICE) für den Verbrennungsmotor (M) einen Wirkungsgrad (eff) des Motorsystems zu berechnen und den Wert für die Sollleistung (P_des), welche der ersten Recheneinrichtung (RE) zugeführt wird, basierend auf dem berechneten Wirkungsgrad (eff) anzupassen und als mechanische Sollleistung (P_des_mech) auszugeben.

2. Leistungssteuervorrichtung nach Anspruch 1,
wobei die Recheneinrichtung (RE) einen ersten Kennlinienspeicher (KS1) aufweist, welcher eine Kennlinie aufweist, die zu einer vorgegebenen mechanischen Leistung die optimalen Drehzahl für den Verbrennungsmotor (M) aufweist, wobei die Recheneinrichtung (RE) ausgebildet ist, basierend auf der mechanischen Sollleistung (P_des_mech) die optimale Drehzahl (n_opt) auszuwählen;
wobei die Recheneinrichtung (RE) einen Drehzahlbegrenzer (MN) aufweist, welcher ausgebildet ist, die ausgewählte optimale Drehzahl (n_opt) basierend auf der maximal zulässigen Drehzahl (n_max) zu begrenzen;
wobei die Recheneinrichtung (RE) einen Ratenbegrenzer (RB) aufweist, welcher dazu ausgebildet ist, die begrenzte Drehzahl zu erhalten und die Änderungsrate der begrenzten Drehzahl basierend auf einer vorgegebenen maximalen Änderungsrate zu begrenzen; und
wobei die Recheneinrichtung (RE) einen ersten Tiefpassfilter (TP1) aufweist, welcher ausgebildet ist, die änderungsratenbegrenzte Drehzahl tiefpasszufiltern und als die Solldrehzahl (n_des) für den elektrischen Generator (G) auszugeben.

3. Leistungssteuervorrichtung nach Anspruch 2,
wobei die Recheneinrichtung (RE) mindestens einen zweiten Kennlinienspeicher (KS2-1, KS2-2) und eine Auswahleinrichtung (AW) aufweist, welche ausgebildet ist, auszuwählen, welcher Kennlinienspeicher (KS1, KS2-1, KS2-2) für die Auswahl der optimalen Drehzahl (n_opt) genutzt wird.

4. Leistungssteuervorrichtung nach einem der vorherigen Ansprüche 2 und 3,
wobei die Recheneinrichtung (RE) einen Divisionsblock (D1) aufweist, welcher dazu ausgebildet ist, mechanischen Sollleistung (P_des_mech) durch einen ersten konstanten Wert (K1), insbesondere durch 2*π/60, und durch die Solldrehzahl (n_des) für den elektrischen Generator (G) zu dividieren und das Ergebnis der Division als Ausgangsdrehmoment (tq_prectl) des Verbrennungsmotors (M) auszugeben.

5. Leistungssteuervorrichtung nach einem der vorherigen Ansprüche,
wobei die Trägheitskompensationseinrichtung (TK) einen Speicher (Z1) zum Speichern eines Wertes der Solldrehzahl (n_des) aufweist und dazu ausgebildet ist, jeweils aus einem aktuellen Wert der Solldrehzahl (n_des) und einem gespeicherten älteren Wert der Solldrehzahl (n_des) eine Änderung der Solldrehzahl (n_des) zu berechnen;
wobei die Trägheitskompensationseinrichtung (TK) eine Multiplikationseinrichtung (M1) aufweist, welche dazu ausgebildet ist, den berechneten Wert der Änderung der Solldrehzahl (n_des) mit einem zweiten konstanten Wert (K2), insbesondere mit 2*π/60, und mit einem Wert des Massenträgheitsmoments (j_Rex) des Verbrennungsmotors (M) und des Generators (G) zu multiplizieren.

6. Leistungssteuervorrichtung nach einem der vorherigen Ansprüche,
wobei die Effizienzberechnungseinrichtung (EB) mindestens einen dritten Kennlinienspeicher (KS3-1, KS3-2) aufweist, in welchem Kennlinien für den Wirkungsgrad (eff_generator) des Generators (G) und den Wirkungsgrad (eff_transmission) eines mit dem Generator (G) gekoppelten Inverters des Motorsystems (3) über die Drehzahl und das Drehmoment gespeichert sind,
wobei die Effizienzberechnungseinrichtung (EB) ausgebildet ist, einen auf Berechnungen basierenden Wert für den Wirkungsgrad (eff_calc) des Motorsystems (3) basierend auf aus dem mindestens einen dritten Kennlinienspeicher (KS3-1, KS3-2) für die Solldrehzahl (n_des) für den elektrischen Generator (G) und das Ausgangsdrehmoment (tq_prectl) des Verbrennungsmotors (M) ausgelesenen Wirkungsgraden (eff_generator, eff_transmission) zu berechnen.

7. Leistungssteuervorrichtung nach einem der vorherigen Ansprüche,
wobei die Effizienzberechnungseinrichtung (EB) ausgebildet ist, eine Ausgangsleistung (Pout) des Motorsystems (3) durch eine Multiplikation der Batteriespannung (u_bat) mit dem Generatorstrom (i_act) zu berechnen; und
wobei die Effizienzberechnungseinrichtung (EB) ausgebildet ist, eine Eingangsleistung (Pin) des Motorsystems (3) aus der Solldrehzahl (n_des) für den elektrischen Generator (G) und dem Ausgangsdrehmoment (tq_prectl) des Verbrennungsmotors (M) zu berechnen.

8. Leistungssteuervorrichtung nach Anspruch 7,
wobei die Effizienzberechnungseinrichtung (EB) ausgebildet ist, von der berechneten Eingangsleistung (Pin) das durch das Massenträgheitsmoment (j_Rex) des Verbrennungsmotors (M) auf eine Welle des Generators (G) übertragene Drehmoment (tq_J) zu subtrahieren.

9. Leistungssteuervorrichtung nach den vorherigen Ansprüchen 6 bis 8,
wobei die Effizienzberechnungseinrichtung (EB) einen zweiten Tiefpassfilter (TP2) aufweist, welcher ausgebildet ist, die berechnete Ausgangsleistung (Pout) tiefpasszufiltern, und einen dritten Tiefpassfilter (TP3) aufweist, welcher ausgebildet ist, die berechnete Eingangsleistung (Pin) des Motorsystems tiefpasszufiltern;
wobei die Effizienzberechnungseinrichtung (EB) ausgebildet ist, einen auf Messwerten basierenden Wert für den Wirkungsgrad (eff_meassure) durch eine Division der gefilterten berechnete Ausgangsleistung (Pout) und der gefilterten berechnete Eingangsleistung (Pin) des Motorsystems (3) zu berechnen.

10. Leistungssteuervorrichtung nach Anspruch 9,
wobei die Effizienzberechnungseinrichtung (EB) einen ersten Hochpassfilter (HP1) aufweist und ausgebildet ist, aus dem auf Messwerten basierenden Wert für den Wirkungsgrad (eff_meassure) und dem auf Berechnungen basierende Wert für den Wirkungsgrad (eff_calc) des Motorsystems (3), welcher auf einer Hochpassfilterung des auf Berechnungen basierende Werts für den Wirkungsgrads (eff_calc) mit dem Hochpassfilter (HP1) basiert, den Wirkungsgrad (eff) des Motorsystems (3) zu berechnen.

11. Motorsteuervorrichtung (2) für ein Motorsystem (3) mit einem Verbrennungsmotor (M) und einem mit dem Verbrennungsmotor (M) gekoppeltem elektrischen Generator (G),
mit einer Leistungssteuervorrichtung (1) nach einem der vorherigen Ansprüche;
mit einer Drehzahlsteuereinrichtung (DS), welche mit der Leistungssteuervorrichtung (1) gekoppelt ist und ausgebildet ist, von der Leistungssteuervorrichtung (1) ein Ausgangsmoment (tq_prectl) des Verbrennungsmotors (M) zu erhalten und die Drehzahl (n_act) des elektrischen Generators (G) in Abhängigkeit von einer von der Leistungssteuervorrichtung (1) angefragten Solldrehzahl (n_des) und dem Ausgangsmoment (tq_prectl) des Verbrennungsmotors (M) zu steuern.

12. Motorsteuervorrichtung nach Anspruch 11,
wobei die Drehzahlsteuereinrichtung (DS) einen Drehzahlregler (DR) aufweist, welcher ausgebildet ist, basierend auf der Solldrehzahl (n_des) für den elektrischen Generator (G) und einer aktuellen Drehzahl des elektrischen Generators (G) ein Vorgabedrehmoment (tq_{ctl}) zu berechnen;
wobei die Drehzahlsteuereinrichtung (DS) einen Sollstromregler (IR) aufweist, welcher ausgebildet ist, basierend auf der Summe des Vorgabedrehmoments (tq_{ctl}) und des Ausgangsdrehmoments (tq_prectl) des Verbrennungsmotors (M) einen Sollstrom (I_{des}) für den Generator (G) zu berechnen; und
wobei die Drehzahlsteuereinrichtung (DS) ferner einen Stromsteller (IS) aufweist, welcher ausgebildet ist, basierend auf dem berechneten Sollstrom (I_{des}) den Strom (I) in dem Generator (G) zu stellen.

13. Motorsystem (3),
mit einem Verbrennungsmotor (M);
mit einem mit dem Verbrennungsmotor (M) gekoppeltem elektrischen Generator (G); und mit einer Motorsteuervorrichtung (2) nach einem der Ansprüche 11 und 12, welche mit dem Verbrennungsmotor (M) und mit dem Generator (G) gekoppelt ist und ausgebildet ist, den Verbrennungsmotor (M) und den Generator (G) zu steuern.

## Claims

1. Power controller (1) for an engine controller (2) for an engine system (3) having an internal combustion engine (M) and an electric generator (G) coupled to the internal combustion engine (M),
having a computing device (RE) which is designed to receive a desired power (P_des) for the engine system (3) and a maximum permissible speed (n_max) for the internal combustion engine (M) and to calculate a desired speed (n_des) for the electric generator (G) and an output torque (tq_prectl) of the internal combustion engine (M) on the basis of the desired power (P_des) and the maximum permissible speed (n_max);
having an inertia compensation device (TK) which is designed to calculate a torque (tq_J) transmitted to a shaft of the generator (G) by a total mass moment of inertia (j_Rex) of the internal combustion engine (M) and of the generator (G) on the basis of a change in the desired speed (n_des) for the electric generator (G) and to calculate a desired torque (tq_ICE) for the internal combustion engine (M) on the basis of the transmitted torque (tq_J) and the calculated output torque (tq_prectl) of the internal combustion engine (M); and
having an efficiency calculation device (EB) which is designed to calculate an efficiency (eff) of the engine system on the basis of the desired speed (n_des) for the electric generator (G) and the calculated output torque (tq_prectl) of the internal combustion engine (M) and a battery voltage (u_bat) and a generator current (i_act) of a battery of the engine system (3) and the calculated desired torque (tq_ICE) for the internal combustion engine (M) and to adapt the value for the desired power (P_des), which is supplied to the first computing device (RE), on the basis of the calculated efficiency (eff) and to output it as the desired mechanical power (P_des_mech).

2. Power controller according to Claim 1,
the computing device (RE) having a first characteristic curve memory (KS1) having a characteristic curve which has the optimum speed for the internal combustion engine (M) for a predefined mechanical power, the computing device (RE) being designed to select the optimum speed (n_opt) on the basis of the desired mechanical power (P_des_mech); the computing device (RE) having a speed limiter (MN) which is designed to limit the selected optimum speed (n_opt) on the basis of the maximum permissible speed (n_max);
the computing device (RE) having a rate limiter (RB) which is designed to obtain the limited speed and to limit the change rate of the limited speed on the basis of a predefined maximum change rate; and
the computing device (RE) having a first low-pass filter (TP1) which is designed to subject the speed whose change rate has been limited to low-pass filtering and to output it as the desired speed (n_des) for the electric generator (G) .

3. Power controller according to Claim 2,
the computing device (RE) having at least one second characteristic curve memory (KS2-1, KS2-2) and a selection device (AW) which is designed to select which characteristic curve memory (KS1, KS2-1, KS2-2) is used to select the optimum speed (n_opt).

4. Power controller according to either of the preceding Claims 2 and 3,
the computing device (RE) having a division block (D1) which is designed to divide the desired mechanical power (P_des_mech) by a first constant value (K1), in particular by 2*π/60, and by the desired speed (n_des) for the electric generator (G) and to output the division result as the output torque (tq_prectl) of the internal combustion engine (M).

5. Power controller according to one of the preceding claims,
the inertia compensation device (TK) having a memory (Z1) for storing a value of the desired speed (n_des) and being designed to respectively calculate a change in the desired speed (n_des) from an instantaneous value of the desired speed (n_des) and a stored older value of the desired speed (n_des);
the inertia compensation device (TK) having a multiplication device (M1) which is designed to multiply the calculated value of the change in the desired speed (n_des) by a second constant value (K2), in particular by 2*π/60, and by a value of the mass moment of inertia (j_Rex) of the internal combustion engine (M) and of the generator (G).

6. Power controller according to one of the preceding claims,
the efficiency calculation device (EB) having at least one third characteristic curve memory (KS3-1, KS3-2) which stores characteristic curves for the efficiency (eff_generator) of the generator (G) and the efficiency (eff_transmission) of an inverter of the engine system (3), which is coupled to the generator (G), against the speed and the torque,
the efficiency calculation device (EB) being designed to calculate a calculation-based value for the efficiency (eff_calc) of the engine system (3) on the basis of efficiencies (eff_generator, eff_transmission) read from the at least one third characteristic curve memory (KS3-1, KS3-2) for the desired speed (n_des) of the electric generator (G) and for the output torque (tq_prectl) of the internal combustion engine (M).

7. Power controller according to one of the preceding claims,
the efficiency calculation device (EB) being designed to calculate an output power (Pout) of the engine system (3) by multiplying the battery voltage (u_bat) by the generator current (i_act); and
the efficiency calculation device (EB) being designed to calculate an input power (Pin) of the engine system (3) from the desired speed (n_des) for the electric generator (G) and the output torque (tq_prectl) of the internal combustion engine (M).

8. Power controller according to Claim 7,
the efficiency calculation device (EB) being designed to subtract the torque (tq J) transmitted to a shaft of the generator (G) by the mass moment of inertia (j_Rex) of the internal combustion engine (M) from the calculated input power (Pin).

9. Power controller according to one of the preceding claims 6 to 8,
the efficiency calculation device (EB) having a second low-pass filter (TP2) which is designed to subject the calculated output power (Pout) to low-pass filtering and having a third low-pass filter (TP3) which is designed to subject the calculated input power (Pin) of the engine system to low-pass filtering;
the efficiency calculation device (EB) being designed to calculate a value, which is based on measured values, for the efficiency (eff measure) by dividing the filtered calculated output power (Pout) and the filtered calculated input power (Pin) of the engine system (3).

10. Power controller according to Claim 9,
the efficiency calculation device (EB) having a first high-pass filter (HP1) and being designed to calculate the efficiency (eff) of the engine system (3) from the value, which is based on measured values, for the efficiency (eff_measure) and from the calculation-based value for the efficiency (eff_calc) of the engine system (3), which is based on high-pass filtering of the calculation-based value for the efficiency (eff_calc) using the high-pass filter (HP1).

11. Engine controller (2) for an engine system (3) having an internal combustion engine (M) and an electric generator (G) coupled to the internal combustion engine (M),
having a power controller (1) according to one of the preceding claims;
having a speed controller (DS) which is coupled to the power controller (1) and is designed to obtain an output torque (tq_prectl) of the internal combustion engine (M) from the power controller (1) and to control the speed (n_act) of the electric generator (G) on the basis of a desired speed (n_des) requested from the power controller (1) and the output torque (tq_prectl) of the internal combustion engine (M).

12. Engine controller according to Claim 11,
the speed controller (DS) having a speed regulator (DR) which is designed to calculate a prespecified torque (tq_{ctl}) on the basis of the desired speed (n_des) for the electric generator (G) and an instantaneous speed of the electric generator (G);
the speed controller (DS) having a desired current regulator (IR) which is designed to calculate a desired current (I_{des}) for the generator (G) on the basis of the sum of the prespecified torque (tq_{ctl}) and the output torque (tq_prectl) of the internal combustion engine (M); and
the speed controller (DS) also having a current controller (IS) which is designed to set the current (I) in the generator (G) on the basis of the calculated desired current (I_{des}) .

13. Engine system (3),
having an internal combustion engine (M);
having an electric generator (G) coupled to the internal combustion engine (M); and
having an engine controller (2) according to either of Claims 11 and 12 which is coupled to the internal combustion engine (M) and to the generator (G) and is designed to control the internal combustion engine (M) and the generator (G)

## Revendications

1. Arrangement de commande de puissance (1) pour un arrangement de commande de moteur (2) pour un système à moteur (3) comprenant un moteur à combustion interne (M) et un générateur électrique (G) couplé avec le moteur à combustion interne (M),
comprenant un dispositif de calcul (RE) qui est conçu pour recevoir une puissance de consigne (P_des) pour le système à moteur (3) et une vitesse de rotation maximale admissible (n_max) pour le moteur à combustion interne (M) et, en se basant sur la puissance de consigne (P_des) et la vitesse de rotation maximale admissible (n_max), calculer une vitesse de rotation de consigne (n_des) pour le générateur électrique (G) et un couple de sortie (tq_prectl) pour le moteur à combustion interne (M) ;
comprenant un dispositif de compensation d'inertie (TK) qui est conçu pour, en se basant sur une modification de la vitesse de rotation de consigne (n_des) pour le générateur électrique (G), calculer un couple (tq_J) transmis à un arbre du générateur (G) par un moment d'inertie des masses total (j_Rex) du moteur à combustion interne (M) et du générateur (G) et, en se basant sur le couple (tq_J) transmis et le couple de sortie (tq_prectl) calculé du moteur à combustion interne (M), calculer un couple de consigne (tq_ICE) pour le moteur à combustion interne (M) ; et
comprenant un dispositif de calcul de rendement (EB) qui est conçu pour, en se basant sur la vitesse de rotation de consigne (n_des) pour le générateur électrique (G) et le couple de sortie (tq_prectl) calculé du moteur à combustion interne (M) et une tension de batterie (u_bat) et un courant de générateur (i_act) d'une batterie du système à moteur (3) et le couple de consigne (tq_ICE) calculé pour le moteur à combustion interne (M), calculer un taux de rendement (eff) du système à moteur et adapter la valeur de la puissance de consigne (P_des), laquelle est acheminée au premier dispositif de calcul (RE), en fonction du taux de rendement (eff) calculé et la délivrer sous la forme de puissance de consigne mécanique (P_des_mech).

2. Arrangement de commande de puissance selon la revendication 1,
le dispositif de calcul (RE) possédant une première mémoire de courbes caractéristiques (KS1), laquelle possède une courbe caractéristique qui présente la vitesse de rotation optimale pour le moteur à combustion interne (M) en rue d'une puissance mécanique prédéfinie, le dispositif de calcul (RE) étant conçu pour sélectionner la vitesse de rotation optimale (n_opt) en se basant sur la puissance de consigne mécanique (P_des_mech) ;
le dispositif de calcul (RE) possédant un limiteur de vitesse de rotation (MN) qui est conçu pour limiter la vitesse de rotation optimale (n_opt) sélectionnée en se basant sur la vitesse de rotation maximale admissible (n_max) ;
le dispositif de calcul (RE) possédant un limiteur de taux (RB) qui est conçu pour obtenir la vitesse de rotation limitée et limiter le taux de variation de la vitesse de rotation limitée en se basant sur un taux de variation maximal prédéfini ; et
le dispositif de calcul (RE) possédant un premier filtre passe-bas (TP1) qui est conçu pour effectuer un filtrage passe-bas de la vitesse de rotation au taux de variation limité et délivrer celle-ci en tant que vitesse de rotation de consigne (n_des) pour le générateur électrique (G).

3. Arrangement de commande de puissance selon la revendication 2,
le dispositif de calcul (RE) possédant au moins une deuxième mémoire de courbes caractéristiques (KS2-1, KS2-2) et un dispositif de sélection (AW) qui est configuré pour sélectionner quelle mémoire de courbes caractéristiques (KS1, KS2-1, KS2-2) sera utilisée pour la sélection de la vitesse de rotation optimale (n_opt).

4. Arrangement de commande de puissance selon l'une des revendications, 2 et 3 précédentes
le dispositif de calcul (RE) possédant un bloc de division (D1) qui est conçu pour diviser la puissance de consigne mécanique (P_des_mech) par une première constante (K1), notamment par 2*π/60, et par la vitesse de rotation de consigne (n_des) pour le générateur électrique (G) et délivrer le résultat de la division sous la forme de couple de sortie (tq_prectl) du moteur à combustion interne (M).

5. Arrangement de commande de puissance selon l'une des revendications précédentes,
le dispositif de compensation d'inertie (TK) possédant une mémoire (Z1) destinée à mémoriser une valeur de la vitesse de rotation de consigne (n_des) et étant conçu pour calculer une modification de la vitesse de rotation de consigne (n_des) respectivement à partir d'une valeur actuelle de la vitesse de rotation de consigne (n_des) et d'une valeur plus ancienne mémorisée de la vitesse de rotation de consigne (n_des) ;
le dispositif de compensation d'inertie (TK) possédant un dispositif de multiplication (M1) qui est conçu pour multiplier la valeur calculée de la modification de la vitesse de rotation de consigne (n_des) par une deuxième constante (K2), notamment par 2*π/60, et par une valeur du moment d'inertie des masses (j_Rex) du moteur à combustion interne (M) et du générateur (G).

6. Arrangement de commande de puissance selon l'une des revendications précédentes,
le dispositif de calcul de rendement (EB) possédant au moins une troisième mémoire de courbes caractéristiques (KS3-1, KS3-2) dans laquelle sont mémorisées des courbes caractéristiques pour le taux de rendement (eff_generator) du générateur (G) et le taux de rendement (eff_transmission) d'un onduleur du système à moteur (3) connecté au générateur (G) en fonction de la vitesse de rotation et du couple,
le dispositif de calcul de rendement (EB) étant conçu pour calculer une valeur basée sur des calculs pour le taux de rendement (eff_calc) du système à moteur (3) en se basant sur les taux de rendement (eff_generator, eff_transmission) lus depuis l'au moins une troisième mémoire de courbes caractéristiques (KS3-1, KS3-2) pour la vitesse de rotation de consigne (n_des) pour le générateur électrique (G) et le couple de sortie
(tq_prectl) du moteur à combustion interne (M).

7. Arrangement de commande de puissance selon l'une des revendications précédentes,
le dispositif de calcul de rendement (EB) étant conçu pour calculer une puissance de sortie (Pout) pour le système à moteur (3) par une multiplication de la tension de batterie (u_bat) par le courant de générateur (i_act) ; et
le dispositif de calcul de rendement (EB) étant conçu pour calculer une puissance d'entrée (Pin) du système à moteur (3) à partir de la vitesse de rotation de consigne (n_des) pour le générateur électrique (G) et le couple de sortie (tq_prectl) du moteur à combustion interne (M).

8. Arrangement de commande de puissance selon la revendication 7,
le dispositif de calcul de rendement (EB) étant conçu pour soustraire de la puissance d'entrée (Pin) calculée le couple (tq_J) transmis à un arbre du générateur (G) par le moment d'inertie des masses (j_Rex) du moteur à combustion interne (M).

9. Arrangement de commande de puissance selon les revendications précédentes 6 à 8,
le dispositif de calcul de rendement (EB) possédant un deuxième filtre passe-bas (TP2) qui est conçu pour effectuer un filtrage passe-bas de la puissance de sortie (Pout) calculée, et possédant un troisième filtre passe-bas (TP3) qui est conçu pour effectuer un filtrage passe-bas de la puissance d'entrée (Pin) calculée du système à moteur ;
le dispositif de calcul de rendement (EB) étant conçu pour calculer une valeur basée sur des valeurs mesurées pour le taux de rendement (eff_meassure) par une division de la puissance de sortie (Pout) calculée filtrée et de la puissance d'entrée (Pin) calculée filtrée du système à moteur (3).

10. Arrangement de commande de puissance selon la revendication 9,
le dispositif de calcul de rendement (EB) possédant un filtre passe-haut (HP1) et étant conçu pour calculer le taux de rendement (eff) du système à moteur (3) à partir de la valeur basée sur des valeurs mesurées pour le taux de rendement (eff_meassure) et la valeur basée sur des calculs du taux de rendement (eff_calc) du système à moteur (3), lequel se base sur un filtrage passe-haut avec le filtre passe-haut (HP1) de la valeur basée sur des calculs pour le taux de rendement (eff_calc).

11. Arrangement de commande de moteur (2) pour un système à moteur (3) comprenant un moteur à combustion interne (M) et un générateur électrique (G) couplé avec le moteur à combustion interne (M),
comprenant un arrangement de commande de puissance (1) selon l'une des revendications précédentes ;
comprenant un dispositif de commande de vitesse de rotation (DS) qui est connecté à l'arrangement de commande de puissance (1) et qui est conçu pour obtenir de la part de l'arrangement de commande de puissance (1) un couple de sortie (tq_prectl) du moteur à combustion interne (M) et pour commander la vitesse de rotation (n_act) du générateur électrique (G) en fonction d'une vitesse de rotation (n_des) interrogée par l'arrangement de commande de puissance (1) et le couple de sortie (tq_prectl) du moteur à combustion interne (M).

12. Arrangement de commande de moteur selon la revendication 11,
le dispositif de commande de vitesse de rotation (DS) possédant un régulateur de vitesse de rotation (DR) qui est conçu pour calculer un couple prédéfini (tq_{cll}) en se basant sur la vitesse de rotation de consigne (n_des) pour le générateur électrique (G) et une vitesse de rotation actuelle du générateur électrique (G) ;
le dispositif de commande de vitesse de rotation (DS) possédant un régulateur de courant de consigne (IR) qui est conçu pour calculer un courant de consigne (I_{des}) pour le générateur (G) en se basant sur la somme du couple prédéfini (tq_{cll}) et du couple de sortie (tq_prectl) du moteur à combustion interne (M) ; et
le dispositif de commande de vitesse de rotation (DS) possédant en outre un moyen de réglage de courant (IS) qui est conçu pour régler le courant (I) dans le générateur (G) en se basant sur le courant de consigne (I_{des}) calculé.

13. Système à moteur (3),
comprenant un moteur à combustion interne (M) ;
comprenant un générateur électrique (G) couplé avec le moteur à combustion interne (M) ; et
comprenant un arrangement de commande de moteur (2) selon l'une des revendications 11 et 12, lequel est connecté au moteur à combustion interne (M) et au générateur (G) et lequel est conçu pour commander le moteur à combustion interne (M) et le générateur (G).
